# EUROPÄISCHE PATENTANMELDUNG

(11) **EP 1 199 523 A1**
(43) Veröffentlichungstag der Anmeldung: **24.04.2002**
(21) Anmeldenummer: 00122893.1
(22) Anmeldetag: 20.10.2000
(51) Int. Cl.: F23R 3/34, F23R 3/28, F02C 7/228

(54) **Verfahren zur Beaufschlagung von Brennern in einer Brennkammer sowie Brennkammer mit einer Anzahl von Brennern**

(71) Anmelder: SIEMENS AKTIENGESELLSCHAFT, 80333 München (DE)
(72) Erfinder: Gruschka, Uwe, 41472 Neuss (DE); Prade, Bernd, Dr., 45478 Muelheim A.D. Ruhr (DE); Schmitz, Udo, 45473 Muelheim A.D. Ruhr (DE)

(57) **Zusammenfassung**

Die vorliegende Erfindung betrifft ein Verfahren zur Beaufschlagung von Brennern (1-14) in einer Brennkammer (30) zur Regelung der von einem nachgeschalteten Aggregat (31) erzeugten Leistung. Erfindungsgemäß ist vorgesehen, daß in Abhängigkeit von dieser Leistung ein gruppenweises Umschalten von Brennern (1-24) von einem ersten Betriebszustand (DB) bei niedriger Leistung in einen zweiten Betriebszustand (VB) bei hoher Leistung erfolgt. Hierdurch wird die Flammstabilität im zweiten Betriebszustand erhöht. Weiter wird der Schadstoffausstoß verringert.

## Beschreibung

Verfahren zur Beaufschlagung von Brennen in einer Brennkammer sowie Brennkammer mit einer Anzahl von Brennern

Die vorliegende Erfindung betrifft ein Verfahren zur Beaufschlagung von Brennern in einer Brennkammer zur Regelung der von einem nachgeschalteten Aggregat, insbesondere einer Gasturbine, erzeugten Leistung durch das Umschalten der Brenner zwischen einem ersten Betriebszustand bei niedriger Leistung und einem zweiten Betriebszustand bei hoher Leistung.

Die Erfindung betrifft weiter eine Brennkammer mit einer Anzahl von Brennern zur Erzeugung eines heißen Fluids zum Antreiben eines nachgeschalteten Aggregats, wobei die Brenner zwischen einem ersten Betriebszustand bei niedriger Leistung und einem zweiten Betriebszustand bei hoher Leistung umschaltbar sind.

Bei einem bekannten Verfahren werden zunächst sämtliche Brenner der Brennkammern in den ersten Betriebszustand gebracht. Dieser Betriebszustand wird auch als Diffusionsbetrieb (DB) bezeichnet. Im ersten Betriebszustand liegt eine stabile Flamme der Brenner vor. Allerdings ist der erste Betriebszustand nur bis zu einer gewissen Leistung ökologisch sinnvoll einsetzbar, da der Schadstoffausstoß, insbesondere an Stickoxiden, sehr hoch ist. Die Leistungsgrenze liegt typischerweise zwischen etwa 40 und etwa 60 Prozent der maximalen Leistung des nachgeschalteten Aggregats.

Bei Erreichen der Leistungsgrenze werden sämtliche Brenner in den zweiten Betriebszustand umgeschaltet. Dieser Betriebszustand wird auch als Vormischbetrieb (VB) bezeichnet. Von der Leistungsgrenze bis zu maximalen Leistung laufen die Brenner im zweiten Betriebszustand.

Die Stabilität der Brennerflamme ist im zweiten Betriebszustand allerdings geringer als im ersten Betriebszustand. Die Temperatur der Flamme muß wesentlich höher gehalten werden. Es wird daher deutlich mehr Brennstoff als im ersten Betriebszustand benötigt. Die erhöhte Brennstoffzufuhr führt zu einer Erhöhung der von dem nachgeschalteten Aggregat erzeugten Leistung. Ein technisch sinnvoller Betrieb sämtlicher Brenner im zweiten Betriebszustand ist daher erst ab der Leistungsgrenze von etwa 40 bis 60 Prozent, insbesondere bei etwa 50 Prozent, der maximalen Leistung möglich. Der genaue Wert der Leistungsgrenze hängt von den Randbedingungen ab.

Das nachgeschaltete Aggregat kann daher aus ökologischen Gründen nur kurzzeitig im ersten Betriebszustand eingesetzt werden. Die erzeugte Leistung kann somit praktisch nur zwischen der Leistungsgrenze und der maximalen Leistung geregelt werden. Ein Betrieb in Teillast unterhalb dieser Leistungsgrenze ist auf Grund von Umweltschutzauflagen nicht dauerhaft möglich. Es steht daher in der Praxis nur ein eingeschränkter Leistungsbereich zur Verfügung.

Weiter kann Brennkammerbrummen auftreten. Brennkammerbrummen wird durch periodisch auftretende Effekte der Flammen sowie Wechselwirkungen zwischen den Flammen ausgelöst.

Aufgabe der vorliegenden Erfindung ist es daher, ein Verfahren und eine Vorrichtung bereitzustellen, die eine umfassende Regelung der erzeugten Leistung des nachgeschalteten Aggregats bei verringertem Schadstoffausstoß ermöglichen und Brennkammerbrummen vermeiden.

Erfindungsgemäß wird diese Aufgabe bei einem Verfahren der eingangs genannten Art dadurch gelöst, daß in Abhängigkeit von der von dem nachgeschalteten Aggregat erzeugten Leistung eine erste Gruppe von Brennern in den zweiten Betriebszustand umgeschaltet wird.

Bei der erfindungsgemäßen Vorrichtung ist zur Lösung dieser Aufgabe vorgesehen, daß die Brenner zu mehreren Gruppen zusammengefaßt sind, die getrennt voneinander ansteuerbar und in den zweiten Betriebszustand umschaltbar sind.

Der Grundgedanke der Erfindung besteht darin, nicht mehr wie bisher sämtliche Brenner bei Erreichen einer bestimmten Leistung vom ersten Betriebszustand in den zweiten Betriebszustand umzuschalten. Die Brenner werden vielmehr zu mehreren Gruppen zusammengefaßt. Diese Gruppen sind getrennt voneinander ansteuerbar und in den zweiten Betriebszustand umschaltbar. In Abhängigkeit von der erzeugten Leistung wird zunächst eine erste Gruppe von Brennern in den zweiten Betriebszustand umgeschaltet.

Durch dieses Vorgehen wird erreicht, daß die zur Erzeugung der im Umschaltzeitpunkt vorliegenden Leistung benötigte Brennstoffmenge auf eine geringere Anzahl von Brennern verteilt wird. Die Anzahl der Brenner wird hierbei so gewählt, daß die jedem einzelnen Brenner zugeführte Brennstoffmenge eine stabile Flamme im zweiten Betriebszustand gewährleistet.

Die Leistungsgrenze für das Umschalten kann auf Grund der verringerten Anzahl der im zweiten Betriebszustand befindlichen Brenner abgesenkt werden. Es steht somit fast der gesamte Leistungsbereich des nachgeschalteten Aggregats für die Leistungsregelung zur Verfügung. Damit wird erstmals ein ökologisch vertretbarer Teillastbetrieb unterhalb der Leistungsgrenze möglich.

Da die in den zweiten Betriebszustand umgeschalteten Brenner in einem optimierten Betriebspunkt arbeiten können, wird der Schadstoffausstoß gesenkt. Auf Grund der verringerten Anzahl der Brenner wird zudem Brennkammerbrummen ausgeschlossen.

Vorteilhafte Ausgestaltungen und Weiterbildungen der Erfindung gehen aus den abhängigen Ansprüchen hervor.

Vorteilhaft wird die Anzahl der Brenner der ersten Gruppe in Abhängigkeit von der im Umschaltzeitpunkt erzeugten Leistung festgelegt. Hierdurch wird sichergestellt, daß jeder in den zweiten Betriebszustand umgeschaltete Brenner mit einer optimalen Menge an Brennstoff versorgt wird. Die Flammstabilität wird weiter erhöht, und der Schadstoffausstoß verringert sich. Durch die Festlegung der Anzahl der umgeschalteten Brenner kann die Leistungsuntergrenze verändert und an den jeweiligen Anwendungsfall angepaßt werden.

In vorteilhafter Ausgestaltung werden die Brenner in mindestens drei Gruppen eingeteilt, die nacheinander in den zweiten Betriebszustand umgeschaltet werden. Hierdurch wird sichergestellt, daß bis zum Erreichen der Leistungsgrenze für ein vollständiges Umschalten in den zweiten Betriebszustand jeder in diesen Zustand umgeschaltete Brenner mit der optimalen Brennstoffmenge versorgt wird.

Gemäß einer vorteilhaften Weiterbildung wird die Umschaltung der ersten Gruppe in Abhängigkeit von der von dem nachgeschalteten Aggregat erzeugten Leistung und die Umschaltung der weiteren Gruppen in Abhängigkeit von einem weiteren Parameter vorgenommen. Als weiterer Parameter kann insbesondere das stöchiometrische Luftverhältnis der Verbrennung im zweiten Betriebszustand und/oder die Position einer ersten Reihe von Leitschaufeln des nachgeschalteten Aggregats ausgewählt werden. Das stöchiometrische Luftverhältnis wird hierbei vorteilhaft zwischen zwei vorgebbaren Grenzwerten, insbesondere zwischen 1,5 und 2,5, gehalten. Bei diesem Vorgehen wird der Schadstoffausstoß, insbesondere an Stickoxiden, minimiert. Gleichzeitig wird eine hohe Stabilität der Flammen im zweiten Betriebszustand sichergestellt.

Bei einigen nachgeschalteten Aggregaten ist die Position der ersten Reihe von Leitschaufeln veränderbar. Der Massenstrom durch die Brennkammer und das nachgeschaltete Aggregat hängt von dieser Position ab. Die Zahl der in den zweiten Betriebszustand umgeschalteten Brenner kann daher alternativ oder zusätzlich auch in Abhängigkeit von der Schaufelposition festgelegt werden.

Nach einer vorteilhaften Ausgestaltung werden vor, während oder nach dem Umschalten der ersten Gruppe in den zweiten Betriebszustand die weiteren Brennergruppen abgeschaltet. Diese Brennergruppen sind dann mit Pilotflammen versehen, die auch nach der Abschaltung brennen. Diese Pilotflammen stellen ein rasches Anschalten der Brenner sicher. Alternativ können die weiteren Brennergruppen im ersten Betriebszustand belassen werden.

Vorteilhaft werden die Brenner der zweiten Gruppe derart ausgewählt, daß sie benachbart zu den Brennern der ersten Gruppe angeordnet sind. Auch die Brenner der dritten Gruppe werden vorteilhaft benachbart zu den Brennern der zweiten Gruppe angeordnet. Hierdurch wird erreicht, daß die bereits im zweiten Betriebszustand mit relativ hoher Temperatur laufenden Brenner nur bis zum Umschalten der zweiten beziehungsweise dritten Gruppe neben einem vergleichsweise kalten, nicht umgeschalteten oder abgeschalteten Brenner laufen. Falls ein im zweiten Betriebszustand befindlicher Brenner und ein abgeschalteter Brenner nebeneinander angeordnet sind, wird der im zweiten Betriebszustand befindliche Brenner von dem benachbarten Brenner gekühlt. Diese Kühlung beeinträchtigt die Stabilität der Flamme. Durch die vorgeschlagene Anordnung der Brenner der einzelnen Gruppen wird dieser Kühleffekt minimiert.

In vorteilhafter Weiterbildung werden mindestens zwei einander benachbarte Brenner zu einer Gruppe zusammengefaßt. Hierdurch wird eine weitere Verringerung des Kühleffekts erreicht.

Bei der erfindungsgemäßen Vorrichtung sind die Brenner zumindest einer Gruppe gleichmäßig über den Umfang der Brennkammer verteilt. Diese Anordnung der Brenner stellt eine vergleichsweise gleichmäßige Temperaturverteilung über den Umfang der Brennkammer und des nachgeschalteten Aggregats sicher. Hohe Temperaturunterschiede zwischen einzelnen Abschnitten des Umfangs werden vermieden.

Die Brenner der zweiten Brennergruppe können wiederum benachbart zu den Brennern der ersten Brennergruppe angeordnet sein. Sinngemäß gilt dies auch für die dritte sowie eventuell weitere Brennerguppen. Diese Anordnung minimiert den Kühleffekt und erhöht die Stabilität der Verbrennung.

Nach einer vorteilhaften Ausgestaltung ist mindestens ein Einsatz zur Trennung von jeweils benachbarten Brennern vorgesehen. Vorteilhaft ist der mindestens eine Einsatz zwischen benachbarten Brennern der ersten und der letzten in den zweiten Betriebszustand umgeschalteten Gruppe angeordnet. Der Einsatz schirmt die bereits umgeschalteten Brenner gegenüber den noch nicht umgeschalteten Brennern ab und verringert den Kühleffekt. Weiter werden die Flammen der Brenner durch den mindestens einen Einsatz voneinander getrennt. Eine Überlagerung von Effekten benachbarter Flamme, die zu Brennkammerbrummen führen kann, wird verhindert.

Nachstehend wird die Erfindung an Hand eines Ausführungsbeispiels näher beschrieben, das in schematischer Weise in der Zeichnung dargestellt ist. Für gleiche oder funktionsidentische Bauteile werden hierbei dieselben Bezugszeichen verwendet. Dabei zeigt:
- Figur 1: einen schematischen Längsschnitt durch eine Brennkammer mit einem nachgeschalteten Aggregat;
- Figur 2: eine Darstellung der Änderung der Position der ersten Reihe von Leitschaufeln;
- Figur 3: einen Schnitt längs der Linie III in Figur 1 mit Kennzeichnung der Brennergruppen;
- Figur 4: eine schematische Darstellung des stöchiometrischen Luftverhältnisses bezogen auf die von dem nachgeschalteten Aggregat erzeugte Leistung unter Angabe des Umschaltens der Brennergruppe; und
- Figur 5: eine Tabelle mit unterschiedlichen Umschaltungen der Brenner.

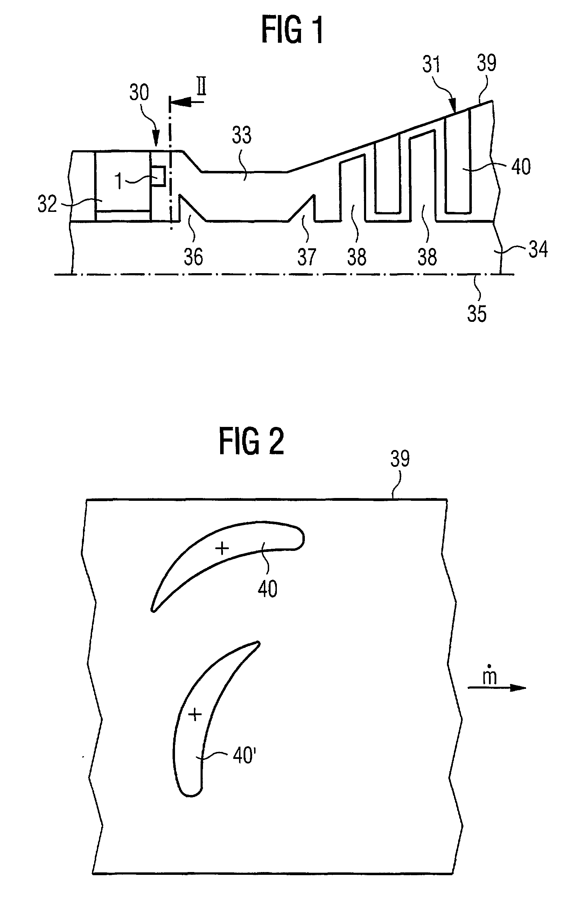

Figur 1 zeigt einen schematischen Längsschnitt durch eine Brennkammer 30 mit einer nachgeschalteten Gasturbine 31. In der Brennkammer ist ein Halter 32 vorgesehen, an dem eine Reihe von Brennern 1-24 angebracht ist. Die Brenner 1-24 sind zu einer Expansionskammer 33 gerichtet.

Die Gasturbine 31 weist eine Welle 34 auf, die um eine Achse 35 drehbar ist und den Halter 32 durchgreift. Auf der Welle 34 sind zwei Vorsprünge 36, 37 zur Begrenzung der Expansionskammer 33 angeordnet. Die Vorsprünge 36, 37 und der dazwischenliegende Abschnitt der Welle 34 können mit einem geeigneten, nicht näher dargestellten Hitzeschild versehen sein.

Stromabwärts der Expansionskammer 33 ist die Welle 34 mit einer Reihe von Laufschaufeln 38 versehen. Ein Gehäuse 39 der Gasturbine 31 weist Leitschaufeln 40 auf. Im Betrieb wird von den Brennern 1-24 ein geeigneter Brennstoff verbrannt. Zusammen mit dem Luftstrom durch die Brenner entsteht in der Expansionskammer 33 ein heißes, unter Druck stehendes Fluid, das die Gasturbine 31 durchströmt und die Welle 34 in Drehung um die Achse 35 versetzt.

Figur 2 zeigt eine Ansicht der Innenseite des Gehäuses 39. Eine Leitschaufel 40 ist einmal unverändert und einmal in gedrehter Position 40' dargestellt. Durch eine Änderung der Position wird der Massenstrom *m* durch die Gasturbine 31 und damit der angesaugte Luftmassenstrom beeinflußt.

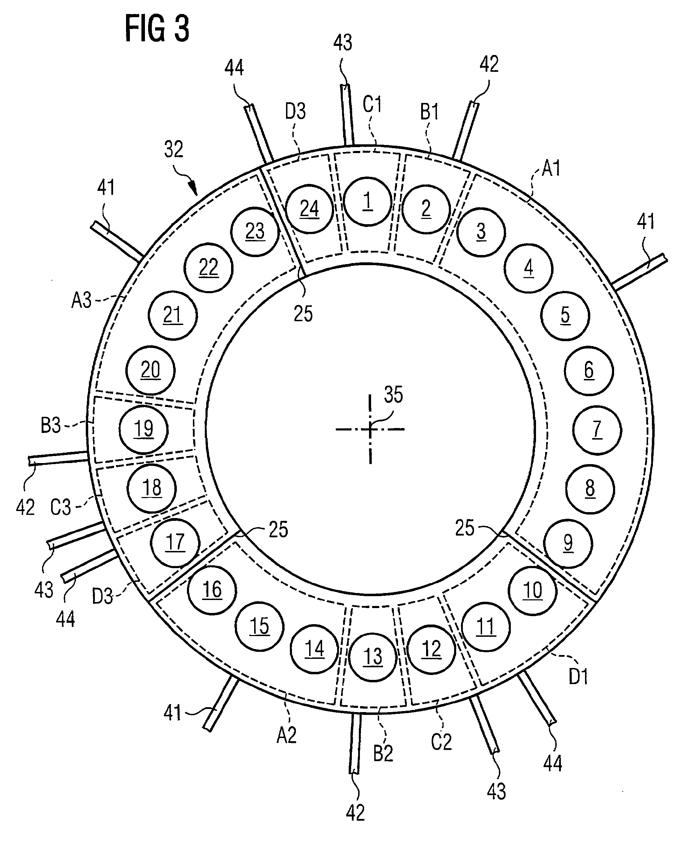

Figur 3 zeigt einen Schnitt durch die Brennkammer 30 längs der Linie III in Figur 1. Im dargestellten Ausführungsbeispiel ist der Halter 32 im wesentlichen kreisförmig ausgebildet. Die Brenner 1-24 sind gleichmäßig über den Umfang verteilt. Neben den Brennern 9,16 und 23 sind Einsätze 25 vorgesehen. Die Einsätze 25 bewirken eine thermische Abschirmung von nebeneinander liegenden Brennern.

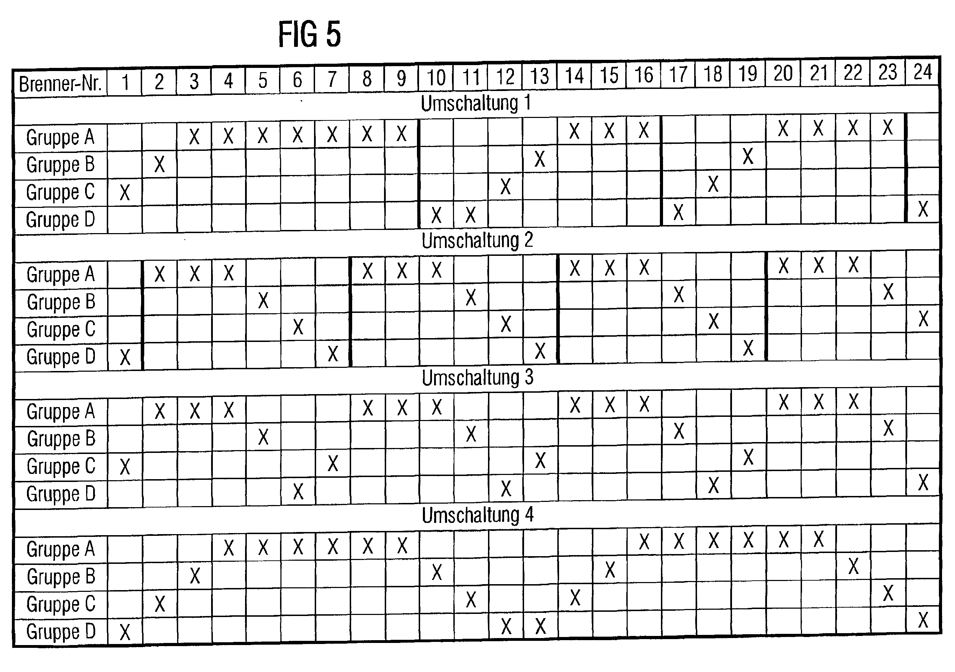

Erfindungsgemäß werden bei Erreichen der Leistungsobergrenze für den ersten Betriebszustand nicht alle Brenner 1-24 in den zweiten Betriebszustand umgeschaltet. Die Brenner 1-24 sind vielmehr zu mehreren Gruppen A, B, C, D zusammengefaßt, die getrennt voneinander ansteuerbar und in den zweiten Betriebszustand umschaltbar sind. Die Tabelle gemäß Figur 5 gibt eine Übersicht über insgesamt vier mögliche Umschaltungen. Die Brenner der Gruppe A werden hierbei als erstes in den zweiten Betriebszustand umgeschaltet. Gleichzeitig oder mit geringer Verzögerung werden die Brenner der Gruppen B, C, D vollständig abgeschaltet. Es brennt lediglich noch eine Pilotflamme, die ein rasches Wiederanschalten der abgeschalteten Brenner sicherstellt.

Die einzelnen Gruppen A, B, C, D sind mit Strichlinien angedeutet. Die dargestellte Aufteilung der Brenner 1-24 auf die Gruppen A, B, C, D entspricht der Umschaltung 1 gemäß Figur 5.

Jede der Gruppen A, B, C, D ist hierbei in insgesamt drei Unterabschnitte A1, A2, A3, B1, B2, B3, C1, C2, C3, D1, D2, D3 aufgeteilt. Für jede Gruppe A, B, C, D ist eine eigene Zuführung 41, 42, 43, 44 vorgesehen. Die Gruppen A, B, C, D sind daher getrennt voneinander ansteuerbar und insbesondere getrennt voneinander in den zweiten Betriebszustand umschaltbar.

Die Lage der Einsätze 25 ist in Figur 5 durch dicke, durchgezogene Linien kenntlich gemacht. Die Einsätze 25 sind zwischen benachbarten Brennern der ersten Gruppe A und letzten Gruppe D vorgesehen. Bei Umschaltung 1 sind beispielsweise die Brenner 9, 16 der Gruppe A zugeordnet, während die Brenner 10, 17 in Gruppe D eingeteilt sind. Die Brenner 9, 16 werden daher als erstes in den zweiten Betriebszustand mit vergleichsweise hoher Flammentemperatur umgeschaltet. Die abgeschalteten Brenner 10, 17 bewirkt eine Kühlung der Brenner 9, 16 und damit eine Beeinträchtigung der Flammstabilität. Die Einsätze 25 verringern diese Kühlwirkung und erhöhen somit die Stabilität der Flamme. Sie verhindern weiter Brennkammerbrummen.

Es ist weiter dargestellt, daß zwei oder mehr benachbarte Brenner zu einer Gruppe zusammengefaßt werden. Bei Umschaltung 1 sind beispielsweise die nebeneinander angeordneten Brenner 3-9, 14-16 und 20-23 der Gruppe A zugeordnet. Die Brenner 2-8, 15, 21, 22 sind dann zwischen zwei ebenfalls umgeschalteten Brennern 3, 9, 14, 16, 20, 23 angeordnet, so daß keine Kühlwirkung auftritt. Die Kühlwirkung auf die Brenner 3, 9, 14, 16, 20, 23 ist nur einseitig und somit beschränkt, so daß die Stabilität der Flammen nur wenig beeinträchtigt wird.

Die Brenner der einzelnen Gruppen A, B, C können jeweils benachbart zueinander angeordnet werden. Es ist beispielsweise in Umschaltung 4 vorgesehen, daß zunächst die Brenner 4-9 und 16-21 umgeschaltet werden. Anschließend erfolgt ein Umschalten der benachbarten Brenner 3, 10, 15, 22. Die dritte Gruppe C umfaßt die Brenner 2, 11, 14, 23, die zur Gruppe B benachbart sind. Durch diese Zuordnung der Brenner 1-24 zu den Gruppen A, B, C kann der Kühleffekt nochmals verringert werden. Es kann daher auf die bei den Umschaltungen 1-3 erforderlichen Einbauten 25 verzichtet werden.

Die einzelnen Gruppen A, B, C, D können gleichmäßig über den Umfang des Halters 32 und damit der Brennkammer 30 verteilt werden. Dies ist beispielsweise in den Umschaltungen 2-4 dargestellt. Hierdurch ergibt sich eine im wesentlichen gleichmäßige Temperaturverteilung über den Umfang. Hohe Temperaturunterschiede entlang des Umfangs, die zu einer Beschädigung der Gasturbine 31 führen können, werden vermieden.

Die Anzahl der Brenner der ersten Gruppe A wird hierbei in Abhängigkeit von der im Umschaltzeitpunkt vorliegenden Leistung ausgewählt. Bei Umschaltung 1 umfaßt die Gruppe A 14 Brenner. Bei den Umschaltungen 2 bis 4 ist diese Zahl auf 12 Brenner verringert worden. Hier erfolgt daher die Umschaltung bei einer etwas geringeren Leistung als bei Umschaltung 1, um eine optimale Brennstoffversorgung der Brenner der Gruppe A sicherzustellen.

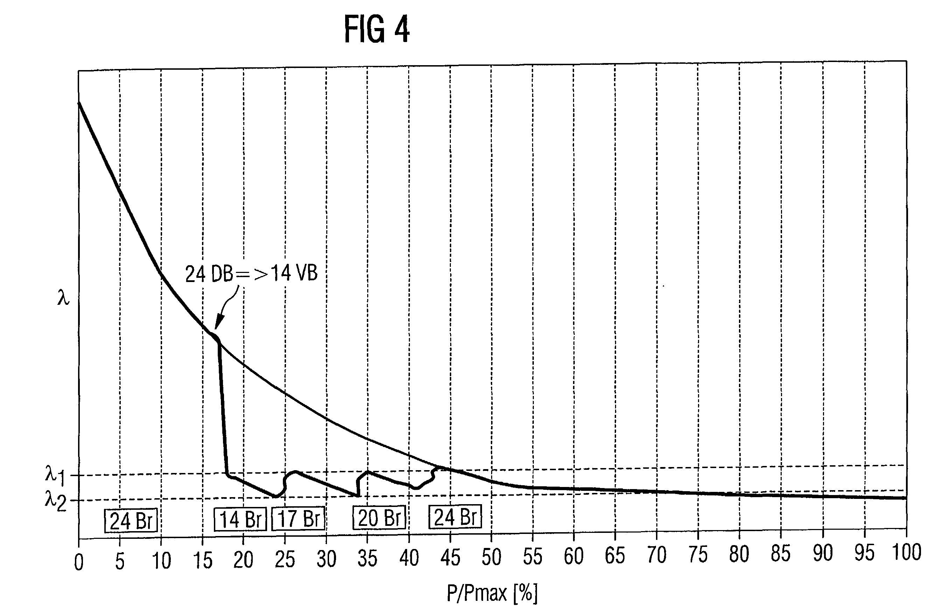

Figur 4 zeigt eine schematische Darstellung des stöchiometrischen Luftverhältnisses λ des zweiten Betriebszustands bezogen auf die von der Gasturbine 31 erzeugte Leistung P. Die von der Gasturbine 31 erzeugte Leistung P wird hierbei in Prozent der maximalen Leistung Pₘₐₓ angegeben. Bis zu einer Leistungsgrenze von etwa 17 Prozent laufen sämtliche Brenner 24 im ersten Betriebszustand. Bei Erreichen dieser Leistungsgrenze erfolgt ein Umschalten von 14 Brennern in den zweiten Betriebszustand. Dies ist schematisch durch 24 DB⇒14 VB angedeutet. Die fett durchgezogene Linie, die das stöchiometrische Luftverhältnis λ angibt, fällt zum Umschaltzeitpunkt rasch ab.

Bei einer weiteren Leistungserhöhung fällt das stöchiometrische Luftverhältnis λ weiter ab, im dargestellten Ausführungsbeispiel auf eine vorgebbare Untergrenze λ₂ von etwa 1,5. Bei Erreichen dieser Untergrenze wird die zweite Gruppe B von Brennern in den zweiten Betriebszustand geschaltet. Die Gruppe B umfaßt im dargestellten Ausführungsbeispiel insgesamt drei Brenner. Die Anzahl der Brenner der Gruppe B wird so gewählt, daß sich nach dem Umschalten in den zweiten Betriebszustand eine vorgebbare Obergrenze λ₁ für das stöchiometrische Luftverhältnis λ von etwa 2,5 einstellt.

Das stöchiometrische Luftverhältnis λ fällt dann bei steigender Leistung wieder auf die vorgegebene Untergrenze λ₂ ab, worauf die drei Brenner der Gruppe C in den zweiten Betriebszustand geschaltet werden. Die Zahl der Brenner der dritten Gruppe C wird wiederum derart ausgewählt, daß die vorgegebene-Obergrenze λ₁ für das stöchiometrische Luftverhältnis λ nicht überschritten wird. Bei weiterer Leistungserhöhung werden schließlich die verbleibenden Brenner der Gruppe D zugeschaltet. Selbstverständlich können auch mehr oder weniger als vier Gruppen vorgesehen werden.

Unterhalb der fett durchgezogenen Linie, die das stöchiometrische Luftverhältnis λ kennzeichnet, ist die Zahl der jeweils aktiven Brenner angegeben. Zu Beginn laufen sämtliche Brenner 1-24 im ersten Betriebszustand, also im Diffusionsbetrieb. Dies ist mit "24 Br" angegeben. Zum Umschaltzeitpunkt werden 14 der Brenner in den zweiten Betriebszustand, den Vormischbetrieb, umgeschaltet. Die weiteren Brenner werden abgeschaltet. Es sind daher 14 Brenner aktiv, die durch "14 Br" angegeben sind. Es werden anschießend bei einer Leistungserhöhung die weiteren Brenner der Gruppen B, C, D zugeschaltet, bis schließlich sämtliche Brenner 1-24 im zweiten Betriebszustand laufen.

Durch das erfindungsgemäß vorgesehene Umschalten nur eines Teils der Brenner 1-24 in den zweiten Betriebszustand wird die Flammstabilität wesentlich verbessert. Die bisher erforderlichen Überwachungsmaßnahmen zum Gewährleisten einer ausreichenden Flammstabilität können daher wesentlich verringert werden. Weiter können die umgeschalteten Brenner nahe ihrem optimalen Betriebspunkt betrieben werden. Es wird daher auch der Schadstoffausstoß wesentlich verringert.

## Patentansprüche

1. Verfahren zur Beaufschlagung von Brennern (1-24) in einer Brennkammer (30) zur Regelung der von einem nachgeschalteten Aggregat (31), insbesondere einer Gasturbine, erzeugten Leistung durch das Umschalten der Brenner (1-24) zwischen einem ersten Betriebszustand (DB) bei niedriger Leistung und einem zweiten Betriebszustand (VB) bei hoher Leistung, **dadurch gekennzeichnet, daß** in Abhängigkeit von der von dem nachgeschalteten Aggregat (31) erzeugten Leistung eine erste Gruppe (A) von Brennern (1-24) in den zweiten Betriebszustand (VB)umgeschaltet wird.

2. Verfahren nach Anspruch 1, **dadurch gekennzeichnet, daß** die Anzahl der Brenner (1-24) der ersten Gruppe (A) in Abhängigkeit von der im Umschaltzeitpunkt erzeugten Leistung festgelegt wird.

3. Verfahren nach Anspruch 1 oder 2, **dadurch gekennzeichnet, daß** die Brenner (1-24) in mindestens drei Gruppen (A, B, C, D) eingeteilt werden, die nacheinander in den zweiten Betriebszustand (VB) umgeschaltet werden.

4. Verfahren nach Anspruch 3, **dadurch gekennzeichnet, daß** die Umschaltung der ersten Gruppe (A) in Abhängigkeit von der von dem nachgeschalteten Aggregat (31) erzeugten Leistung und die Umschaltung der weiteren Gruppen (B, C, D) in Abhängigkeit von mindestens einem weiteren Parameter vorgenommen wird.

5. Verfahren nach Anspruch 4, **dadurch gekennzeichnet, daß** als weiterer Parameter das stöchiometrische Luftverhältnis (λ) der Verbrennung im zweiten Betriebszustand (VB) und/oder die Position einer ersten Reihe von Leitschaufeln (40) des nachgeschalteten Aggregats (31) ausgewählt wird.

6. Verfahren nach Anspruch 5, **dadurch gekennzeichnet, daß** das stöchiometrische Luftverhältnis (λ) zwischen zwei vorgebbaren Grenzwerten gehalten wird.

7. Verfahren nach einem der Ansprüche 1 bis 6, **dadurch gekennzeichnet, daß** vor, während oder nach dem Umschalten der ersten Gruppe (A) in den zweiten Betriebszustand (VB) die weiteren Brennergruppen (B, C, D) abgeschaltet werden.

8. Verfahren nach einem der Ansprüche 1 bis 7, **dadurch gekennzeichnet, daß** die Brenner (1-24) der zweiten Gruppe (B) derart ausgewählt werden, daß sie benachbart zu den Brennern (1-24) der ersten Gruppe (A) angeordnet sind.

9. Verfahren nach einem der Ansprüche 1 bis 8, **dadurch gekennzeichnet, daß** die Brenner (1-24) der dritten Gruppe (C) derart ausgewählt werden, daß sie benachbart zu den Brennern (1-24) der zweiten Gruppe (B) angeordnet sind.

10. Verfahren nach einem der Ansprüche 1 bis 9, **dadurch gekennzeichnet, daß** mindestens zwei einander benachbarte Brenner (1-24) zu einer Gruppe (A; D) zusammengefaßt werden.

11. Brennkammer mit einer Anzahl von Brennern (1-24) zur Erzeugung eines heißen Fluids zum Antreiben eines nachgeschalteten Aggregats (31), wobei die Brenner (1-24) zwischen einem ersten Betriebszustand (DB) bei niedriger Leistung und einem zweiten Betriebszustand (VB) bei hoher Leistung umschaltbar sind, **dadurch gekennzeichnet, daß** die Brenner (1-24) zu mehreren Gruppen (A, B, C, D) zusammengefaßt sind, die getrennt voneinander ansteuerbar und in den zweiten Betriebszustand (VB) umschaltbar sind.

12. Brennkammer nach Anspruch 11, **dadurch gekennzeichnet, daß** die Brenner (1-24) zumindest einer Gruppe (A; B; C; D) gleichmäßig über den Umfang der Brennkammer (30) verteilt sind.

13. Brennkammer nach einem der Ansprüche 11 oder 12, **dadurch gekennzeichnet, daß** die Brenner (1-24) der zweiten Brennergruppe (B) benachbart zu den Brennern (1-24) der ersten Brennergruppe (A) angeordnet sind.

14. Brennkammer nach einem der Ansprüche 11 bis 13, **dadurch gekennzeichnet, daß** die Brenner (1-24) der dritten Brennergruppe (C) benachbart zu den Brennern (1-24) der zweiten Brennergruppe (B) angeordnet sind.

15. Brennkammer nach einem der Ansprüche 11 bis 16, **dadurch gekennzeichnet, daß** mindestens ein Einsatz (25) zur Trennung von jeweils zwei benachbarten Brennern (1-24) vorgesehen ist.

16. Brennkammer nach Anspruch 15, **dadurch gekennzeichnet, daß** der mindestens eine Einsatz (25) zwischen benachbarten Brennern (1-24) der ersten und der letzten in den zweiten Betriebszustand (VB) umgeschalteten Gruppe (A, D) angeordnet ist.
